# EUROPÄISCHE PATENTANMELDUNG

(11) **EP 4 417 569 A1**
(43) Veröffentlichungstag der Anmeldung: **21.08.2024**
(21) Anmeldenummer: 24156682.7
(22) Anmeldetag: 08.02.2024
(51) Int. Cl.: B67D 1/00, B67D 1/08

(54) **VORRICHTUNG ZUR BEREITSTELLUNG VON KARBONIESIERTEM UND GEKÜHLTEM FLUID**

(30) Priorität: 17.02.2023 DE 102023201390
(71) Anmelder: BLANCO GmbH + Co KG, 75038 Oberderdingen (DE)
(72) Erfinder: Zöllner, Thomas, 42369 Wuppertal (DE); Schmidt, Kay, 75038 Flehingen (DE)
(74) Vertreter: Ullrich & Naumann PartG mbB

(57) **Zusammenfassung**

Die Erfindung betrifft eine Vorrichtung zur Bereitstellung von aufbereitetem Fluid, insbesondere von
Trinkwasser, umfassend
eine Aufbereitungseinrichtung mit zumindest einem Aufbereitungsbehälter zum Aufbereiten des Fluids und mit einer Temperiereinrichtung zum Temperieren des Fluids in dem zumindest einen Aufbereitungsbehälter, vorzugsweise zu dessen Kühlung, wobei
zumindest eine Vor-Temperiereinrichtung angeordnet ist mit zumindest einem Behälter zur Temperierung des nicht aufbereiteten Fluids, wobei der Behälter einen Einlass für nicht-temperiertes, nicht aufbereitetes Fluid aufweist und einen Auslass, an dem temperiertes, nicht-aufbereitetes Fluid bereitstellbar ist, und wobei die Temperiereinrichtung derart ausgebildet ist, sodass
a) das temperierte nicht aufbereitete Fluid in Strömungsrichtung vor einem Aufbereiten durch die Aufbereitungseinrichtung durch die Temperiereinrichtung für die Aufbereitungseinrichtung temperierbar ist, oder
b) das nicht aufbereitete Fluid vor und/oder während der Aufbereitung in der Aufbereitungseinrichtung und/oder bei einem Entnehmen des aufbereiteten Fluids aus der Aufbereitungseinrichtung durch die Temperiereinrichtung temperierbar ist.

## Beschreibung

Die Erfindung betrifft eine Vorrichtung zur Bereitstellung von aufbereitetem Fluid, insbesondere von Trinkwasser, umfassend eine Aufbereitungseinrichtung mit zumindest einem Aufbereitungsbehälter zum Aufbereiten des Fluids und mit einer Temperiereinrichtung zum Temperieren des Fluids in dem zumindest einen Aufbereitungsbehälter, vorzugsweise zu dessen Kühlung.

Die Erfindung betrifft weiter ein Sanitärarmatursystem zur Ausgabe von temperiertem und/oder aufbereitetem Fluid, insbesondere Trinkwasser, umfassend eine Vorrichtung zur Bereitstellung von aufbereitetem Fluid und zumindest einen Auslauf zur Ausgabe des temperierten und/oder aufbereiteten Fluids, der mit der Vorrichtung verbunden ist.

Obwohl die vorliegende Erfindung allgemein auf beliebige Aufbereitungseinrichtungen anwendbar ist, wird die vorliegende Erfindung in Bezug auf Aufbereitungseinrichtungen in Form von Karbonatoren für Trinkwasser erläutert.

Aufbereitungseinrichtungen zur Anreichung von Getränken mit Kohlendioxid sind in vielfältiger Weise im Stand der Technik bekannt geworden. Diese Aufbereitungseinrichtungen umfassen zur Getränkekühlung beispielsweise integrierte Karbonatorbehälter mit einem Volumen von ca. 1-2 Liter und gegebenenfalls Vorkühlleitungen zur Bevorratung von gekühltem stillem Wasser und Sprudel für die Getränkezapfungen. Diesen Kühleinrichtungen hydraulisch vorgeschaltet ist gegebenenfalls ein ungekühlter und nicht isolierter Wasserfilter wie zum Beispiel Aktivkohlefilter oder Ionen-Austauscher. Wird ein Getränk gezapft, strömt dabei zunächst Wasser aus diesem Filter in den Kühlbereich des Karbonators nach. Bei längeren Stillstandzeiten ohne Zapfung erwärmt sich das Wasser im Filter auf Umgebungstemperatur. Diese kann insbesondere bei Anordnung der Aufbereitungseinrichtung in einem Küchenunterschrank bis über 40°C ansteigen. Dieses Wasser vermischt sich bei den bekannten Kühleinrichtungen mit Karbonator und/oder Kühlleitung schnell mit dem bereits gekühlten Wasser, sodass bei erneutem Zapfen sich dann eine deutlich höhere Entnahmetemperatur bereits nach wenigen 100 ml des gezapften Getränks einstellt. Dies führt zudem zu einer schlechteren CO₂-Bindung im Getränk. Ein weiterer Nachteil ist, dass bei höheren Temperaturen auch das Hygienerisiko, insbesondere im Filter, bei verlängerten Stillstandzeiten, steigt.

Aus der DE 199 33 118 A1 ist eine Wasseraufbereitungsanlage für Trinkwasser mit einer Zapfeinrichtung bekannt geworden, wobei aus zwei in Reihe geschalteten Behältern einerseits stilles Wasser und andererseits karbonisiertes Wasser lieferbar ist. Weiter ist eine Kühleinrichtung für die Wasserbehälter vorhanden mit stärkerer Abkühlung des zweiten Behälters. Die Abkühlung des Trinkwassers kann durch die Behälter umgebende Kühlschlangen einer Kältemaschine erfolgen, wobei für den zweiten Behälter je nach Bedarf zusätzliche Kühlschlangenlängen verwendet werden.

Nachteilig dabei ist, dass die Wasseraufbereitungsanlage wenig flexibel und ineffizient ist, da die Wasserbehälter separat mit Kältemittel beaufschlagt werden müssen. Darüber hinaus erwärmt sich das gekühlte Wasser wieder in den Leitungen, bevor dieses den Karbonatoren zugeführt wird. Damit ergibt sich weiterhin ein Hygienerisiko, wenn längere Zeit kein karbonisiertes Wasser gezapft wird.

Eine Aufgabe der vorliegenden Erfindung ist es daher, eine Vorrichtung zur Bereitstellung von aufbereitetem Fluid und ein Sanitärarmatursystem zur Verfügung zu stellen, welche eine effektivere Temperierung und ein reduziertes Hygienerisiko ermöglichen, wobei gleichzeitig eine ausreichende Menge an aufbereitetem Fluid bereitgestellt werden soll.

Eine weitere Aufgabe der vorliegenden Erfindung ist es, eine alternative Vorrichtung zur Bereitstellung von aufbereitetem Fluid und ein alternatives Sanitärarmatursystem zur Verfügung zu stellen.

In einer Ausführungsform löst die vorliegende Erfindung die vorstehend genannten Aufgaben bei einer Vorrichtung zur Bereitstellung von aufbereitetem Fluid, insbesondere von Getränken, umfassend eine Aufbereitungseinrichtung mit zumindest einem Aufbereitungsbehälter zum Aufbereiten des Fluids und mit einer Temperiereinrichtung zum Temperieren des Fluids in dem zumindest einen Aufbereitungsbehälter, vorzugsweise zu dessen Kühlung, dadurch, dass zumindest eine Vor-Temperiereinrichtung angeordnet ist mit zumindest einem Behälter zur Temperierung des nichtaufbereiteten Fluids, wobei der Behälter einen Einlass für nicht-temperiertes, nicht aufbereitetes Fluid aufweist und einen Auslass, an dem temperiertes, nicht aufbereitetes Fluid bereitstellbar ist, und dass die Temperiereinrichtung derart ausgebildet ist, sodass
a) das temperierte, nicht aufbereitete Fluid in Strömungsrichtung vor einem Aufbereiten durch die Aufbereitungseinrichtung durch die Temperiereinrichtung für die Aufbereitungseinrichtung temperierbar ist, oder
b) das nicht aufbereitete Fluid vor und/oder während der Aufbereitung in der Aufbereitungseinrichtung und/oder bei einem Entnehmen des aufbereiteten Fluids aus der Aufbereitungseinrichtung durch die Temperiereinrichtung temperierbar ist.

In einer Ausführungsform löst die vorliegende Erfindung die vorstehend genannten Aufgaben ebenfalls durch ein Sanitärarmatursystem zur Ausgabe von temperiertem und/oder aufbereitetem Fluid, insbesondere Trinkwasser, umfassend eine Vorrichtung gemäß einem der Ansprüche 1-14 und zumindest einen Auslauf zur Ausgabe des temperiertem und/oder aufbereitetem Fluids, der mit der Vorrichtung verbunden ist.

Einer der damit erzielten Vorteile ist, dass eine effiziente Temperierung bei gleichzeitiger effizienter Aufbereitung zur Verfügung gestellt werden kann. Ein weiterer Vorteil ist, dass ausreichend aufbereitetes und temperiertes Fluid zur Verfügung gestellt werden kann bei gleichzeitig reduziertem Hygienerisiko.

Der Begriff "Sanitär" ist im weitesten Sinne zu verstehen und bezieht sich, insbesondere in der Beschreibung, vorzugsweise in den Ansprüchen unter anderem auf jegliche Objekte, Anordnungen, Vorrichtungen, Einrichtungen und dergleichen im Zusammenhang mit Bädern, Küchen, Heizungen und dergleichen.

Weitere Merkmale, Vorteile und weitere Ausführungsformen der Erfindung sind im Folgenden beschrieben oder werden dadurch offenbar.

Gemäß einer vorteilhaften Weiterbildung der Erfindung sind die zumindest eine Vor-Temperiereinrichtung und die Temperiereinrichtung in einem gemeinsamen Temperierkreislauf eingebunden, insbesondere wobei die zumindest eine Vor-Temperiereinrichtung im Temperierkreislauf stromabwärts der Temperiereinrichtung angeordnet ist. Ein möglicher Vorteil hiervon ist, dass auf einfache und gleichzeitig effiziente Weise beide Temperiereinrichtungen mit Temperiermedium beaufschlagt werden können.

Gemäß einer weiteren vorteilhaften Weiterbildung der Erfindung sind Temperiereinrichtung und die zumindest eine Vor-Temperiereinrichtung seriell oder parallel zueinander im Temperierkreislauf angeordnet. Vorteil einer seriellen Anordnung ist die insbesondere effiziente Temperierung, wohingegen bei einer parallelen Anordnung eine einfache und flexible, gegebenenfalls getrennte Ansteuerung der Temperiereinrichtungen möglich ist.

Gemäß einer weiteren vorteilhaften Weiterbildung der Erfindung ist eine Schalteinrichtung angeordnet, mit der nicht aufbereitetes, temperiertes Fluid einer Ausgabe zuführbar und/oder der Aufbereitung zuführbar ist, insbesondere in Form eines Drei-Wege-Ventils. Vorteil hiervon ist, dass eine flexible Steuerung des Fluidstroms des nicht aufbereiteten, temperierten Fluids bereitgestellt wird.

Gemäß einer weiteren vorteilhaften Weiterbildung der Erfindung ist im Fluidtransportweg eine Fördereinrichtung, insbesondere in Form einer Pumpe, angeordnet, vorzugsweise im Fluidförderweg zwischen der zumindest einen Vor-Temperiereinrichtung und Temperiereinrichtung. Damit wird auf einfache und effiziente Weise eine Fluidförderung ermöglicht.

Gemäß einer weiteren vorteilhaften Weiterbildung der Erfindung sind mehrere Vor-Temperiereinrichtungen angeordnet, welche zueinander hinsichtlich des Fluidförderwegs parallel zueinander oder seriell hintereinandergeschaltet angeordnet sind. Vorteil hiervon ist, dass im Falle einer Temperierung in Form einer Kühlung tiefere Temperaturen, insbesondere schneller, erreicht werden können.

Gemäß einer weiteren vorteilhaften Weiterbildung der Erfindung ist mittels einer Schaltanordnung aufbereitetes Fluid, mittels mehrerer Temperiereinrichtungen temperiertes Fluid oder eine Mischung hiervon einer Ausgabe zuführbar, insbesondere mittels zumindest zwei Ventilen. Damit wird eine flexible Ausgabe unterschiedlicher Arten von Fluid ermöglicht.

Gemäß einer weiteren vorteilhaften Weiterbildung der Erfindung umfasst die zumindest eine Vor-Temperiereinrichtung eine insbesondere austauschbar angeordnete zweite Aufbereitungseinrichtung, insbesondere eine Filtereinrichtung mit zumindest einem Filter, welche mittels der Vor-Temperiereinrichtung temperierbar ist. Vorteil hiervon ist die erhöhte Flexibilität bei der Bereitstellung unterschiedlich aufbereiteter Fluide.

Gemäß einer weiteren vorteilhaften Weiterbildung der Erfindung weist die zumindest eine Vor-Temperiereinrichtung und/oder die Temperiereinrichtung Leitungen für den Temperierkreislauf auf, die im Bereich der Wandung des Behälters und/oder des Aufbereitungsbehälters angeordnet sind, insbesondere wobei diese in einem Isoliermaterial und/oder in einem luftgefüllten Volumen, vorzugsweise auf der radialen Außenseite des Behälters und/oder Aufbereitungsbehälters angeordnet sind. Vorteil hiervon ist eine effiziente Temperierung des jeweiligen Behälterinhalts.

Gemäß einer weiteren vorteilhaften Weiterbildung der Erfindung ist Zuführleitung zur Aufbereitungseinrichtung zumindest teilweise in einer Wandung des Aufbereitungsbehälters, insbesondere in einem Isoliermaterial, angeordnet. Vorteil hiervon ist eine weitere Vortemperierung des aufzubereitenden Fluids durch die Temperiereinrichtung der Aufbereitungseinrichtung, was eine besonders zuverlässige Temperierung ermöglicht.

Gemäß einer weiteren vorteilhaften Weiterbildung der Erfindung ist der Aufbereitungsbehälter zumindest teilweise in dem Behälter der zumindest einen Vor-Temperiereinrichtung angeordnet. Vorteil hiervon ist eine effiziente Bauraumnutzung.

Gemäß einer weiteren vorteilhaften Weiterbildung der Erfindung sind Aufbereitungsbehälter und Behälter der Vor-Temperiereinrichtung in einem gemeinsamen Gehäuse angeordnet. Damit wird beispielsweise eine effiziente Isolierung insgesamt und kleine Leitungslängen ermöglicht.

Gemäß einer weiteren vorteilhaften Weiterbildung der Erfindung ist ein Rückführkreislauf so angeordnet, dass mittels der Temperiereinrichtung temperiertes, nicht aufbereitetes Fluid zur Temperierung von nicht aufbereitetem, nicht temperiertem Fluid in der Vor-Temperiereinrichtung zurückgeführt wird. Auf diese Weise kann zusätzlich die Vor-Temperiereinrichtung auch ohne direkten Anschluss an einen Temperierkreislauf temperiert werden.

Gemäß einer weiteren vorteilhaften Weiterbildung der Erfindung ist der Rückführkreislauf mittels einer Rückführschalteinrichtung zuschaltbar. Vorteil hiervon ist, dass je nach Bedarf auf effiziente Weise der Rührführkreislauf aktiviert werden kann.

Gemäß einer weiteren vorteilhaften Weiterbildung der Erfindung umfassen die zumindest eine Vor-Temperiereinrichtung und/oder die Temperiereinrichtung einen Phasenwechselspeicher und/oder einen Salzwasser-Niedrigtemperaturspeicher mit zumindest einem Wärmetauscher. Vorteil hiervon ist die erhöhte Flexibilität, je nach Bauraum und Verfügbarkeit und gewünschter Temperierung einen entsprechenden Speicher vorzusehen.

Gemäß einer weiteren vorteilhaften Weiterbildung der Erfindung ist die Aufbereitungseinrichtung in Form eines Karbonators zur Karbonisierung von Trinkwasser ausgebildet, umfassend ein insbesondere nachfüllbar angeordnetes CO₂-Reservoir. Damit kann auf effiziente Weise mit CO₂ angereichertes Fluid bereitgestellt werden.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: eine Karbonisierungsvorrichtung gemäß einer Ausführungsform der vorliegenden Erfindung;
- Figur 2: eine Karbonisierungsvorrichtung gemäß einer Ausführungsform der vorliegenden Erfindung;
- Figur 3: eine Karbonisierungsvorrichtung gemäß einer Ausführungsform der vorliegenden Erfindung;
- Figuren 4-7: verschiedene Vor-Temperier- und Temperiereinrichtungen gemäß Ausführungsformen der vorliegenden Erfindung; und
- Figur 8: eine Karbonisierungsvorrichtung gemäß einer Ausführungsform der vorliegenden Erfindung.

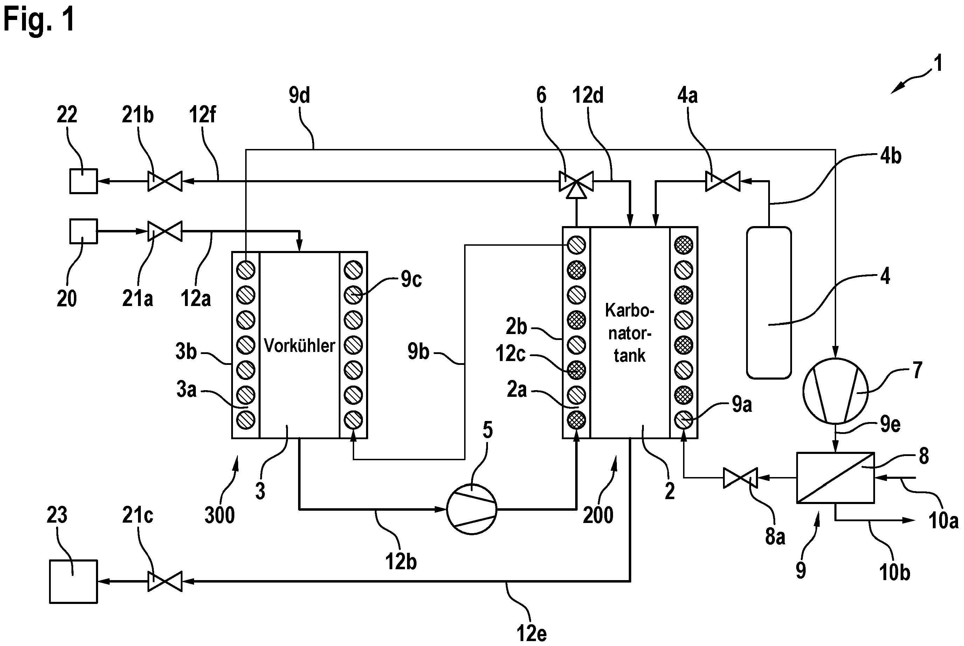

Figur 1 zeigt eine Karbonisierungsvorrichtung gemäß einer Ausführungsform der vorliegenden Erfindung.

In Figur 1 ist eine Karbonisierungsvorrichtung 1 für ein Getränk, insbesondere Trinkwasser, gezeigt. Diese umfasst einen Karbonisierer 200 mit Behälter 2 und eine Vorkühleinrichtung 300 mit Behälter 3. Der jeweilige Behälter 2, 3 weist eine auf den Behälter aufgestülpte Manschette oder eine Wandung 2b, 3b auf, in der eine Isolierung 2a, 3a angeordnet ist. In der Wandung 3b der Vorkühleinrichtung 300 ist eine oder mehrere Leitungen 9c eines Kühlkreislaufs 9 helixförmig angeordnet. Ebenso sind in der Wandung 2b des Behälters 2 Leitungen 9a des Kühlkreislaufs 9 angeordnet sowie Leitungen 12c zur Getränke- oder Trinkwasserausgabe.

Der Kühlkreislauf 9 umfasst einen Kondensierer 8, der mit Leitungen 10a, 10b eines nicht näher beschriebenen Kondensier-Kühlkreislaufs verbunden ist. Ausgehend von dem Kondensierer 8 ist stromabwärts eine Expansionseinrichtung in Form einer Kapillare oder - wie hier - in Form eines Expansionsventils 8a angeordnet, welches weiter mit der genannten Leitung 9a in der Wandung 2b des Behälters 2 verbunden ist. Auf der dem Behälter 2 in vertikaler Richtung gegenüberliegenden Seite - in Figur 1 oben - ist die Leitung 9a über eine Leitung 9b mit der Leitung 9c in der Wandung 3b des Behälters 3 verbunden, deren Eingang sich in Figur 1 unten am Behälter 3 befindet. Auf der dem Behälter 3 in vertikaler Richtung gegenüberliegenden Seite - in Figur 1 oben - ist die Leitung 9c über eine Leitung 9d mit einem Kompressor 7 verbunden, der mittels einer Leitung 9e wiederum mit dem beschriebenen Kondensierer 8 verbunden ist.

Im Folgenden wird die Getränkeausgabe in Form einer Trinkwasserausgabe beschrieben, ist jedoch nicht darauf beschränkt. Ausgehend von einer Trinkwasserbereitstellungseinrichtung 20 wird über ein steuerbares Ventil 21a und eine Leitung 12a Trinkwasser in den Behälter 3 der Vorkühleinrichtung 300 eingeführt. Mittels der in der Wandung 3b angeordneten Leitung 9c des Kühlkreislaufs 9 wird das Trinkwasser vorgekühlt. Nach erfolgter Kühlung in der Vorkühleinrichtung 300 wird das vorgekühlte Trinkwasser über eine Leitung 12b und mittels einer Pumpe 5 in eine Leitung 12c befördert, die ebenfalls in der Wandung 2b des Behälters 2 zusammen, insbesondere alternierend, mit der helixförmig angeordneten Leitung 9a des Kühlkreislaufs 9 verläuft.

Auf diese Weise wird das vorgekühlte Trinkwasser durch den Kühlkreislauf 9 erneut vor dem Einleiten in den Behälter 2 weiter gekühlt. Die Leitung 12c ist nun mit einem Drei-Wege-Ventil 6 verbunden, welches einerseits eine Fluidverbindung über eine Leitung 12d mit dem Behälter 2 ermöglicht, andererseits über eine Leitung 12f und einem schaltbaren Ventil 21b eine Ausgabe 22 des so gekühlten Trinkwassers ermöglicht.

Wie oben beschrieben, mündet die Leitung 12d in den Behälter 2. Darüber hinaus kann mittels einer Leitung 4b und über ein schaltbares Ventil 4a CO₂, welches durch einen CO2-Vorratsbehäter 4 bereitgestellt wird, in den Behälter 2 geleitet werden, um eine Anreichung des vorkühlten Trinkwassers mit CO₂ zu ermöglichen. Über eine Leitung 12e und ein schaltbares Ventil 21c kann das mit CO₂ angereicherte Trinkwasser an einer Ausgabe 23, beispielsweise einem Auslass einer Sanitärarmatur oder dergleichen, ausgegeben werden.

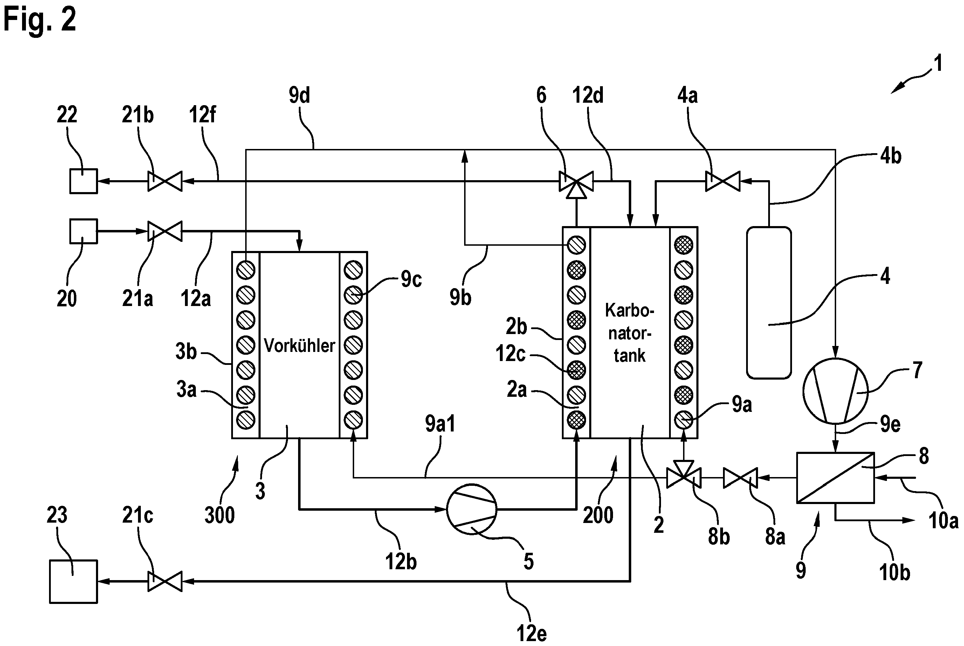

Figur 2 zeigt eine Karbonisierungsvorrichtung gemäß einer Ausführungsform der vorliegenden Erfindung.

In Figur 2 ist im Wesentlichen eine Karbonisierungsvorrichtung 1 gemäß Figur 1 gezeigt. Im Unterschied zur Karbonisierungsvorrichtung 1 gemäß Figur 1 ist bei der Karbonisierungsvorrichtung 1 gemäß Figur 2 nun im Kühlkreislauf 9 stromabwärts des Expansionsventils 8a ein Drei-Wege-Ventil 8b angeordnet, welches einerseits eine Fluidverbindung zu den Leitungen 9a in der Wandung 2b des Behälters 2, andererseits über eine Leitung 9a1 zu der Leitung 9c in der Wandung des Behälters 3 bereitstellt. Die Leitung 9b ist dabei stromabwärts nach Durchgang durch die Wandung 3b des Behälters 3 mit der Leitung 9d verbunden. Im Wesentlichen zeigt die Figur 2 einen Kühlkreislauf 9, bei dem die beiden Behälter 2, 3 zur Kühlung "parallelgeschaltet" sind, wohingegen Figur 1 eine entsprechende "Reihenschaltung" der Behälter 2, 3 für die Kühlung zeigt.

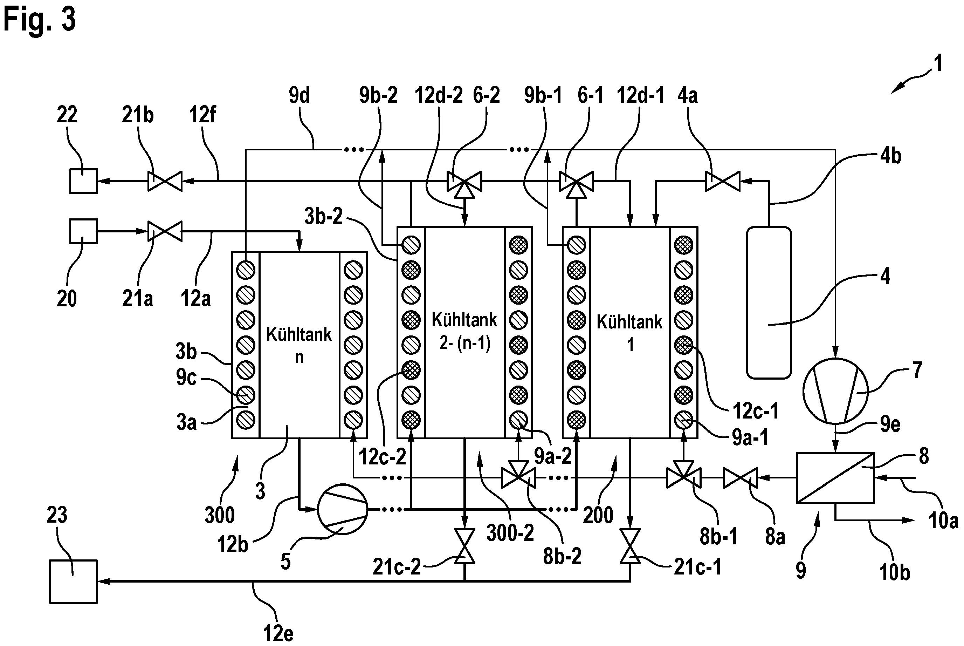

Figur 3 zeigt eine Karbonisierungsvorrichtung gemäß einer Ausführungsform der vorliegenden Erfindung.

Figur 3 zeigt im Wesentlichen eine Karbonisierungsvorrichtung 1 gemäß Figur 2. Im Unterschied zur Karbonisierungsvorrichtung 1 gemäß Figur 2 sind bei der Karbonisierungsvorrichtung 1 gemäß Figur 3 nun mehrere Vorkühleinrichtungen 300, 300-2 angeordnet. Die in Strömungsrichtung, ausgehend von der Trinkwasserbereitstellung 20 angeordnete Vorkühleinrichtung 300 entspricht der Vorkühleinrichtung 300 gemäß Figur 2. Die weitere Vorkühleinrichtung 300-2 weist im Gegensatz hierzu und analog zu der Ausbildung der Leitungen 9a-1, 12c-1 für den Behälter 2 eine Leitung 9a-2 des Kühlkreislaufs 9 und eine Trinkwasserleitung 12c-2 in der Wandung 3b-2 auf.

Weiterhin ist stromabwärts der Pumpe 5 die Trinkwasserleitung 12c-2 des Behälters 3-2 und die Trinkwasserleitung 12c-1 des Behälters 2 parallel mit vorgekühltem Trinkwasser aus dem Behälter 3 beaufschlagbar.

Analog zu dem Drei-Wege-Ventil 6-1, welches mit der Leitung 12c-1 verbunden ist, und einerseits eine Fluidverbindung über eine Leitung 12d-1 mit dem Behälter 3, andererseits über eine Leitung 12f und einem schaltbaren Ventil 21b eine Ausgabe 22 des so gekühlten Trinkwassers ermöglicht, mündet die Leitung 12c-2 ebenfalls einerseits in die Leitung 12f, anderseits kann über ein weiteres Drei-Wege-Ventil 6-2 und über eine Leitung 12d-2 Trinkwasser aus der Leitung 12c-2 in den Behälter 3-2 geleitet werden. Über entsprechende Entnahmeleitungen mit schaltbaren Ventilen 21c-1, 21c-2 kann selektiv Wasser aus den Behältern 3, 3-2 einzeln oder gemischt fluidisch mit einer Wasserausgabe 23 verbunden werden.

Der Kühlkreislauf 9 gemäß Figur 3 weist im Wesentlichen den gleichen Aufbau auf wie der Kühlkreislauf 9 gemäß Figur 2. Dabei ist die zusätzliche Vorkühleinrichtung 300-2 mittels eines zusätzlichen Drei-Wegeventils 8b-2 in den Kühlkreislauf 9 eingebunden.

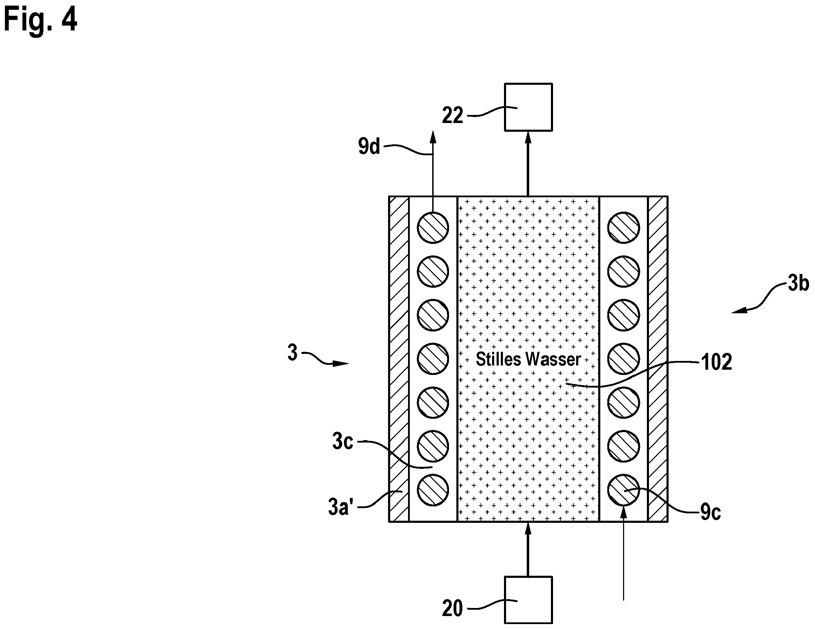

Figuren 4-7 zeigen verschiedene Vor-Temperier- und Temperiereinrichtungen gemäß Ausführungsformen der vorliegenden Erfindung.

In Figur 4 ist im Wesentlichen ein Behälter 3 für eine Vorkühleinrichtung zur Vorkühlung von stillem Wasser 102 gezeigt, welches dann zu einer Wasserausgabe 22 nach Vorkühlung im Behälter 3 ausgehend von einer Wasserzufuhr 20 geleitet wird. Der Behälter 3 weist eine Wandung 3b auf, in der eine oder mehrere Leitungen 9c des Kühlkreislaufs 9 angeordnet sind. Diese können in einem Metallblock, insbesondere hergestellt aus Aluminium, oder in einem mit Luft gefüllten Volumen - Bezugszeichen 3c - angeordnet sein. Auf der radialer Außenseite der Wandung 3b kann Isoliermaterial 3a' angeordnet werden.

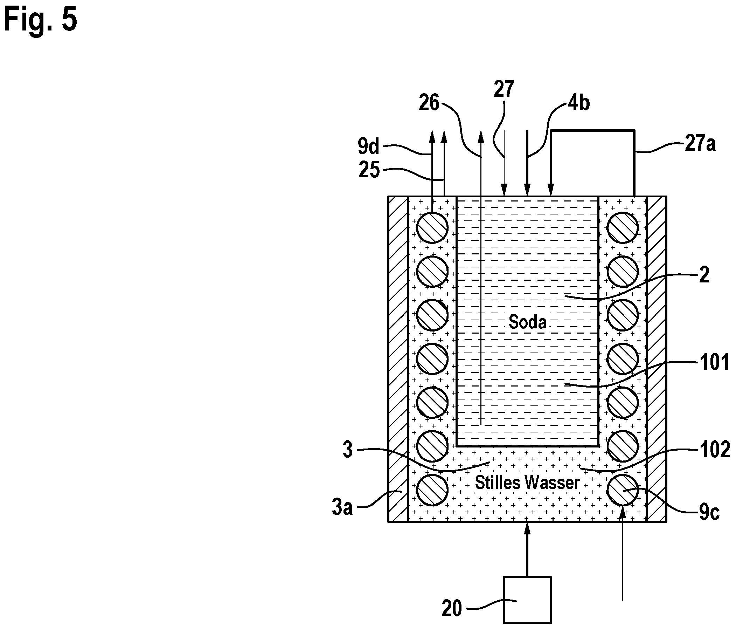

In Figur 5 ist nun im Gegensatz zur Figur 4 die Leitung 9c innerhalb des Behälters 3 geführt und direkt mit stillem Wasser 102 beaufschlagbar. In dem Behälter 3, der auf der radialen Außenseite eine Isolierung 3a aufweist, ist ein Behälter 2 für Soda 101 angeordnet. Dieser wird somit ebenfalls mit der Leitung 9c des Kühlkreislaufs indirekt über das ihn umgebende stille Wasser 102 gekühlt. Dabei ist es ebenso möglich, die Leitung 9c so anzuordnen, dass diese direkt an der Außenseite des Behälters 2 für Soda 101 angeordnet ist, um die Kühlung zu verbessern. Die Zuführung von zu karbonisiertem Wasser zu dem Behälter 2 kann entweder über eine Leitung 27a aus dem Behälter 3 erfolgen oder über eine separate Zuführleitung 27. Eine Entnahme von stillem Wasser 102 kann über eine Leitung 25 aus dem Behälter 3 und eine Entnahme von karbonisiertem Wasser über eine Leitung 26 aus dem Behälter 2 erfolgen. Der Behälter 3 ist dabei wie bei den Ausführungsformen der vorangegangenen Figu-ren 1-3 mit einer CO₂-Zuführleitung 4b zur Einleitung von CO₂ verbunden.

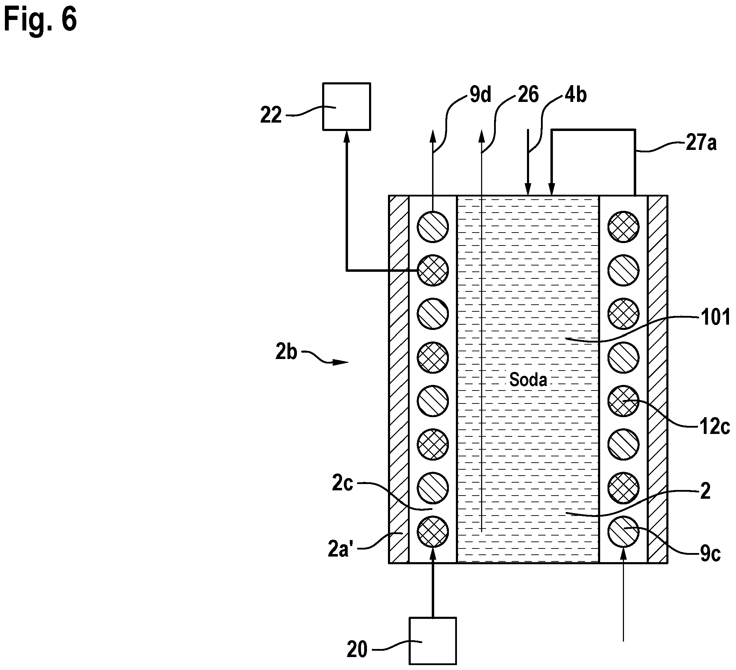

Figur 6 zeigt nun im Wesentlichen einen Behälter 2 zur Karbonisierung von stillem Wasser gemäß Figur 1. Ebenso wie in Figur 1 wird der Behälter 2 durch eine Leitung 9c des Kühlkreislaufs 9 gekühlt. Zusätzlich gezeigt ist hier eine auf der radialen Außenseite angeordnete Isolierung 2a`. Die Wasserzufuhr 20 von stillem Wasser zur Anreicherung mit CO₂ erfolgt dabei über eine in dem luftgefüllten Volumen 2c angeordnete Leitung 12c, die entweder direkt mit einer Wasserausgabe 22 zur Ausgabe von gekühltem stillen Wasser verbunden werden kann oder über eine Leitung 27a dem Behälter 2 zur CO₂-Anreicherung. Über eine Entnahmeleitung 26 kann direkt Soda 101 entnommen werden.

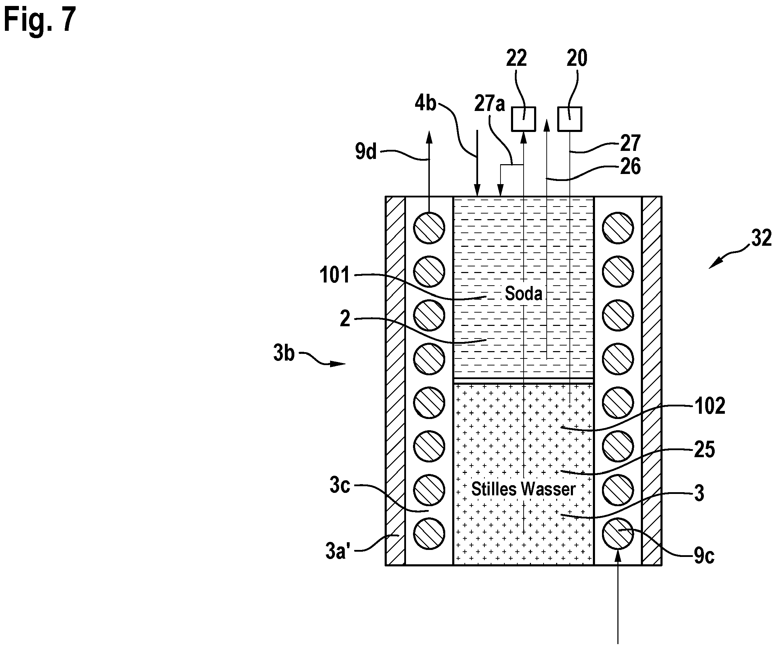

Figur 7 zeigt eine im Gegensatz zu der "Behälter-in-Behälter"-Ausführungsform der Figur 5 nun einen Gesamtbehälter 32, der im unteren Bereich den Behälter 3 für stilles Wasser 102 und im oberen Bereich den Behälter 2 für Soda 101 aufweist. Der Gesamtbehälter 32 weist dabei eine Wandausbildung auf, die dem Behälter 3 der Figur 4 entspricht und lediglich eine oder mehrere Leitungen 9c des Kühlkreislaufs 9 umfasst.

Die Wasserzufuhr 20 für den Behälter 3 kann über eine Zuführleitung 27 erfolgen, die durch den Behälter 2 bis in den Behälter 3 hindurchreicht. Gleiches gilt auch für eine entsprechende Entnahmeleitung 25 für das stille Wasser 102 aus dem Behälter 3. Diese Entnahmeleitung 25 kann wiederum über eine Leitung 27a gekühltes Wasser aus dem Behälter 3 dem Behälter 2 zur CO₂-Anreicherung zuführen. Der Behälter 3 ist dabei wie bei den Ausführungsformen der vorangegangenen Figuren 1-3 mit einer CO₂-Zuführleitung 4b zur Einleitung von CO₂ verbunden.

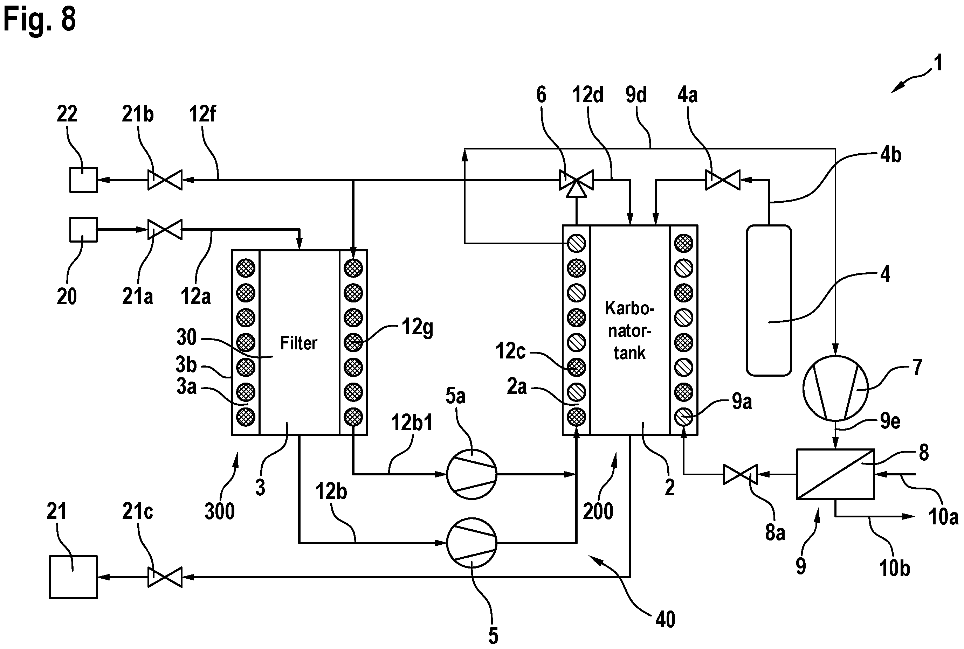

Figur 8 zeigt eine Karbonisierungsvorrichtung gemäß einer Ausführungsform der vorliegenden Erfindung.

In Figur 8 ist im Wesentlichen eine Karbonisierungsvorrichtung 1 gemäß Figur 1 gezeigt. Im Unterschied zur Karbonisierungsvorrichtung 1 gemäß Figur 1 ist bei der Karbonisierungsvorrichtung 1 gemäß Figur 8 die Vorkühleinrichtung 300 mit einer zusätzlichen Aufbereitungskomponente in Form eines Filters 30 versehen, welcher eine Filterung von dem in dem Behälter 3 zu kühlenden Fluid bereitstellt. Ein weiterer Unterschied ist, dass der Behälter 3 nicht mehr in den Kühlkreislauf 9 eingebunden ist, sodass die Leitungen 9b, 9c entfallen und die Leitung 9a direkt mit der Leitung 9d verbunden ist.

Anstelle der Leitung 9c ist nun in der Isolierung 3a eine Trinkwasserleitung 12g angeordnet, die zur Kühlung des Behälters 3 verwendet werden kann. Hierzu ist die Leitung 12g über eine Leitung 12b1 mit einer Zirkulationspumpe 5a verbunden, die wiederrum mit der Leitung 12b und der Leitung 12c für den Behälter 2 verbunden ist. Zusätzlich ist in der Leitung 12f zwischen dem Drei-Wege-Ventil 6 und dem Ventil 21b eine fluidische Verbindung mit der Leitung 12g angeordnet. Wird die Zirkulationspumpe 5a betätigt und mittels des Drei-Wege-Ventils 6 eine fluidische Verbindung zwischen der Leitung 12c und der Leitung 12f hergestellt und das Ventil 21b geschlossen, so kann der Behälter 3 mittels des durch den Kühlkreislauf 9 zusätzlich gekühlten Wassers vor der CO₂₋Anreicherung gekühlt werden. Es wird somit ein Rückführkreislauf 40 gebildet.

Insgesamt kann dabei bei allen Ausführungsformen der Figuren 1-8, ausgenommen der Figur 5, die Temperierung mittels einer außenliegenden, insbesondere nachrüstbaren, Manschette mit den gezeigten Leitungen um das Gehäuse des jeweiligen Behälters erfolgen. Weiter können bei allen Ausführungsformen die Leitungen zur Temperierung, also insbesondere die Leitungen 9a, 9a-1, 9a-2, 9c, 12c, 12c-1, 12c-2, 12g, mäanderförmig, spiralförmig oder dergleichen angeordnet werden.

Die Temperierung kann mittels einer hier nicht gezeigten Steuereinrichtung erfolgen, welche bedarfs- oder zeitbasiert die entsprechende Temperierung vornimmt, indem diese entsprechende Ventile, Pumpen in der Wasserführung und dem Kühlkreislauf auf Basis von Sensorinformationen wie Temperatur in den Behältern, Menge und Art des abzugebenden Fluids oder dergleichen steuert.

Zusammenfassend kann zumindest eine der Ausführungsformen der Erfindung eines der folgenden Merkmale bereitstellen und/oder zumindest einen der folgenden Vorteile verwirklichen:
- Vermindertes Hygienerisiko.
- Verbessertes, insbesondere schnelleres und effizienteres, Temperieren, insbesondere Kühlen.
- Höhere Abgabemenge und schnelleres bereitstellen von temperiertem Fluid.
- Verringerte Temperierverluste.

Obwohl die vorliegende Erfindung anhand bevorzugter Ausführungsbeispiele beschrieben wurde ist sie nicht darauf beschränkt, sondern auf vielfältige Weise modifizierbar.

### Bezugszeichenliste

- 1: Karbonisierungsvorrichtung
- 2: Behälter
- 2a, 2b: Isolierung
- 3, 3-2: Behälter
- 2a, 2a`, 3a, 3a': Isolierung
- 2b, 3b, 3b-2: Wandung
- 2c, 3c: Luftgefülltes Volumen
- 4: Vorratsbehälter CO₂
- 4a: Ventil zur Druckregulierung
- 4b: Zuführleitung CO₂
- 5, 5a: Pumpe
- 6: Dreiwege-Ventil
- 7: Kompressor
- 8: Kondensierer
- 8a: Expansionsventil
- 8b, 8b-2: Dreiwege-Ventil
- 9: Kühlkreislauf
- 9a-e, 9a-1, 9a-2: Leitungen Kühlkreislauf
- 10a, 10b: Kühlwasserleitung Kondensierer
- 12a-f, 12b1, 12c-1: Leitungen Wasser
- 20: Wasserzufuhr, Trinkwasserbereitstellung
- 21a-c: Ventil
- 22: Ausgabe nicht angereichertes Wasser
- 23: Ausgabe karbonisiertes Wasser
- 25: Abführung stilles Wasser
- 26: Abführung Soda
- 27, 27a: Zuführung stilles Wasser
- 30: Filterelement
- 32: Gesamtbehälter
- 40: Rückführkreislauf
- 101: Aufbereitetes Wasser
- 102: Stilles Wasser
- 200: Karbonisierer
- 300, 300-2: Vorkühleinrichtung

## Patentansprüche

1. Vorrichtung (1) zur Bereitstellung von aufbereitetem Fluid, insbesondere von Trinkwasser, umfassend
eine Aufbereitungseinrichtung (200) mit zumindest einem Aufbereitungsbehälter (2) zum Aufbereiten des Fluids und mit einer Temperiereinrichtung (9c) zum Temperieren des Fluids in dem zumindest einen Aufbereitungsbehälter (2), vorzugsweise zu dessen Kühlung,
**dadurch gekennzeichnet, dass**
zumindest eine Vor-Temperiereinrichtung (300) angeordnet ist mit zumindest einem Behälter (3) zur Temperierung des nicht aufbereiteten Fluids, wobei der Behälter (3) einen Einlass für nicht temperiertes, nicht aufbereitetes Fluid aufweist und einen Auslass, an dem temperiertes, nicht aufbereitetes Fluid bereitstellbar ist, und dass die Temperiereinrichtung (200) derart ausgebildet ist, sodass
a) das temperierte nicht aufbereitete Fluid in Strömungsrichtung vor einem Aufbereiten durch die Aufbereitungseinrichtung (200) durch die Temperiereinrichtung (9, 9a) für die Aufbereitungseinrichtung (200) temperierbar ist, oder
b) das nicht aufbereitete Fluid vor und/oder während der Aufbereitung in der Aufbereitungseinrichtung (200) und/oder bei einem Entnehmen des aufbereiteten Fluids aus der Aufbereitungseinrichtung (200) durch die Temperiereinrichtung (9, 9a) temperierbar ist.

2. Vorrichtung (1) gemäß Anspruch 1, **dadurch gekennzeichnet, dass** die zumindest eine Vor-Temperiereinrichtung (300) und die Temperiereinrichtung (9, 9a) in einem gemeinsamen Temperierkreislauf (9) eingebunden sind, insbesondere wobei die zumindest eine Vor-Temperiereinrichtung (300) im Temperierkreislauf (9) stromabwärts der Temperiereinrichtung (9, 9c) angeordnet ist.

3. Vorrichtung (1) gemäß Anspruch 2, **dadurch gekennzeichnet, dass** Temperiereinrichtung (9, 9c) und die zumindest eine Vor-Temperiereinrichtung (300) seriell oder parallel zueinander im Temperierkreislauf (9) angeordnet sind.

4. Vorrichtung (1) gemäß einem der Ansprüche 1-3, **dadurch gekennzeichnet, dass** eine Schalteinrichtung (6, 8b) angeordnet ist, mit der nicht aufbereitetes, temperiertes Fluid einer Ausgabe zuführbar und/oder der Aufbereitung zuführbar ist, insbesondere in Form eines Drei-Wege-Ventils (6, 8b).

5. Vorrichtung (1) gemäß einem der Ansprüche 1-4, **dadurch gekennzeichnet, dass** im Fluidtransportweg eine Fördereinrichtung, insbesondere in Form einer Pumpe (5, 5a), angeordnet ist, vorzugsweise im Fluidförderweg zwischen der zumindest einen Vor-Temperiereinrichtung (300) und Temperiereinrichtung (9, 9c).

6. Vorrichtung (1) gemäß einem der Ansprüche 1-5, **dadurch gekennzeichnet, dass** mehrere Vor-Temperiereinrichtungen (300, 300-2) angeordnet sind, welche zueinander hinsichtlich des Fluidförderwegs parallel zueinander oder seriell hintereinandergeschaltet angeordnet sind, vorzugsweise wobei mittels einer Schaltanordnung aufbereitetes Fluid, mittels mehrerer Temperiereinrichtungen (9, 9c, 300-2) temperiertes Fluid oder eine Mischung hiervon einer Ausgabe (23) zuführbar ist, insbesondere mittels zumindest zwei Ventilen (21c-1, 21c-2).

7. Vorrichtung (1) gemäß einem der Ansprüche 1-6, **dadurch gekennzeichnet, dass** die zumindest eine Vor-Temperiereinrichtung (300, 300-2) eine insbesondere austauschbar angeordnete zweite Aufbereitungseinrichtung (30), insbesondere eine Filtereinrichtung mit zumindest einem Filter, umfasst, welche mittels der Vor-Temperiereinrichtung (300) temperierbar ist.

8. Vorrichtung (1) gemäß einem der Ansprüche 1-7, **dadurch gekennzeichnet, dass** die zumindest eine Vor-Temperiereinrichtung (300) und/oder die Temperiereinrichtung (9, 9c) Leitungen für den Temperierkreislauf (9) aufweist, die im Bereich der Wandung (2b, 3b) des Behälters (3) und/oder Aufbereitungsbehälters (2) angeordnet sind, insbesondere wobei diese in einem Isoliermaterial (2a, 3a) und/oder in einem gasgefüllten Volumen (2c, 3c) angeordnet sind, vorzugsweise auf der radialen Außenseite des Behälters (3) und/oder des Aufbereitungsbehälters (2).

9. Vorrichtung (1) gemäß einem der Ansprüche 1-8, **dadurch gekennzeichnet, dass** eine Zuführleitung (12c) zur Aufbereitungseinrichtung (200) zumindest teilweise in einer Wandung (2b) des Aufbereitungsbehälters (2), insbesondere in einem Isoliermaterial (2a), angeordnet ist.

10. Vorrichtung (1) gemäß einem der Ansprüche 1-9, **dadurch gekennzeichnet, dass** der Aufbereitungsbehälter (2) zumindest teilweise in dem Behälter (3) der zumindest einen Vor-Temperiereinrichtung (300) angeordnet ist.

11. Vorrichtung (1) gemäß einem der Ansprüche 1-10, **dadurch gekennzeichnet, dass** Aufbereitungsbehälter (2) und Behälter (3) der Vor-Temperiereinrichtung (300) in einem gemeinsamen Gehäuse angeordnet sind.

12. Vorrichtung (1) gemäß einem der Ansprüche 1-11, **dadurch gekennzeichnet, dass** ein Rückführkreislauf (40) so angeordnet ist, dass mittels der Temperiereinrichtung (9, 9c) temperiertes, nicht aufbereitetes Fluid zur Temperierung von nicht aufbereitetem, nicht temperiertem Fluid in der Vor-Temperiereinrichtung (300) zurückgeführt wird, vorzugweise wobei der Rückführkreislauf (40) mittels einer Rückführschalteinrichtung (6, 21b) zuschaltbar ist.

13. Vorrichtung (1) gemäß einem der Ansprüche 1-12, **dadurch gekennzeichnet, dass** die zumindest eine Vor-Temperiereinrichtung (300) und/oder die Temperiereinrichtung (9, 9c) einen Phasenwechselspeicher und/oder einen Salzwasser-Niedrigtemperaturspeicher mit zumindest einem Wärmetauscher umfasst.

14. Vorrichtung (1) gemäß einem der Ansprüche 1-13, **dadurch gekennzeichnet, dass** die Aufbereitungseinrichtung (200) in Form eines Karbonators zur Karbonisierung von Trinkwasser ausgebildet ist, umfassend ein insbesondere nachfüllbar angeordnetes CO₂-Reservoir (4).

15. Sanitärarmatursystem zur Ausgabe von temperiertem und/oder aufbereitetem Fluid, insbesondere Trinkwasser, umfassend eine Vorrichtung (1) gemäß einem der Ansprüche 1-14 und zumindest einen Auslauf (21, 22) zur Ausgabe des temperiertem und/oder aufbereitetem Fluids, der mit der Vorrichtung (1) verbunden ist.
